# EUROPEAN PATENT SPECIFICATION

(11) **EP 0 546 629 B1**
(45) Date of publication and mention of the grant of the patent: **26.02.1997**
(21) Application number: 92203799.9
(22) Date of filing: 07.12.1992
(51) Int. Cl.: C08F 210/16

(54) **Process for preparing elastomeric copolymers of ethylene with a high tensile strength of the crude product**
Verfahren zur Herstellung von elastomeren Ethylencopolymerisaten mit hoher Zugfestigkeit des Rohproduktes
Procédé de préparation des copolymères élastomères d'éthylène; le produit brut possédant une haute résistance à la traction

(30) Priority: 10.12.1991 IT MI913312
(43) Date of publication of application: 16.06.1993
(73) Proprietor: ENICHEM ELASTOMERI S.r.l., I-20124 Milan (IT)
(72) Inventor: Banzi, Viviano, I-44049 Vigarano Mainarda (Ferrara) (IT); Loberti, Gianni, I-44044 Porotto (Ferrara) (IT); Caldari, Silvia, I-44100 Ferrara (IT)
(74) Representative: Fusina, Gerolamo

(56) References cited:
- EP-A- 0 235 381
- WO-A-91/07447
- DE-A- 3 628 044
- FR-A- 1 215 308

## Description

The present invention relates to elastomeric copolymers of ethylene with α-olefins. More specifically the present invention relates to elastomeric copolymers including ethylene, an α-olefin having 4 to 8 carbon atoms and possibly propylene, characterized by a high tensile strength of the crude product.

It is known that the mechanical properties of the copolymers of ethylene with α-olefins depend on the kind of α-olefin and the polymerization process used (see, for example, "Encyclopedia of Polymer Science and Technology" Vol. 6, pages 354-357).

Ethylene-propylene elastomers which are produced industrially by means of solution or supension processes using Ziegler-Natta catalysts are already known in the art. These copolymers are mainly used for the production of vulcanized end-products. Consequently the mechanical properties of the crude products are of marginal importance, whereas the rheological characteristics of the mixtures and their resistance to oxidation are fundamental.

For some specific applications, however, the particular transformation technology requires a high toughness of the crude product, such as in the lining of electric cables. In these cases, it is possible to use ethylene/propylene copolymers with a high ethylene content in order to guarantee high tensile strength of the crude products. The use of these polymers is, however, limited, in that, as it is known, the elastic properties deteriorate as the ethylene/propylene ratio increases.

Copolymers obtained by polymerizing ethylene and 1-butene having excellent workability and shock-resistance are described in Patent Application EP-353.318. These products are obtained with supported catalysts containing titatium salts and have an ethylene content which ranges from 1 to 15% in moles.

WO 91/07447 discloses elastomeric copolymers of ethylene including 74-91 % by moles of ethylene and 9-26% by moles of butene and/or propylene, obtained by using a catalyst comprising a compound of vanadium and an organometallic compound of aluminum.

EP-A-0 235 381 discloses a copolymer of 65-95 % by moles of ethylene and 5-35% by mole of butene-1 which can be obtained by solution polymerization using a catalyst comprising a compound of vanadium and an organometallic compound of aluminum.

It has now been surprisingly found that elastomeric copolymers including ethylene, an α-olefin CH₂=CHR, where R is an alkyl radical having from 2 to 6 carbon atoms and possibly propylene, having a high ethylene content, are characterized by a more favourable balance between the toughness of the crude product and the elastic properties with respect to ethylene/propylene copolymers. In particular, these copolymers are characterized by tensile strength values of the crude product ranging from 10 to 200 kg/cm².

The present invention consequently relates to process for preparing an elastomeric ethylene copolymer, having a tensile strength of the crude polymer of between 10 and 200 kg/cm² and including
(a) 75-85 mole % of ethylene, (b) 5-25 mole % of 1-butene and (c) 0-12 mole % of propylene, with the total percent of (a), (b) and (c) being equal to 100, by polymerising in suspension in a liquid phase and in presence of a catalytic system consisting of
(i) a vanadium compound consisting essentially of vanadium triacetylacetonate and
(ii) one or more organometallic aluminum compounds and possibly
(iii) an activator.

When propylene is also present, the molar ratio 1-butene/propylene preferably ranges from 0.3 to 3.5 and is more preferably between 1 and 2.

The general type of catalytic system is well known in the art and is generally used for the preparation of ethylene-propylene elastomeric copolymers and ethylene-propylene diene terpolymers. They are described, for example, in "Encyclopedia of polymer science and engineering", Vol.6, pages 545-548, or also in Patents GB-1.277.629, GB-1.277.353, GB-1.519.472 or in Italian Patent Appllication, 25635 A/69.

Component (ii) is usually an aluminium trialkyl, an aluminium dialkylhalide or an aluminium alkyldihalide, where the alkyl groups, the same or different, contain from 1 to 18 carbon atoms, whereas the halogen is usually chlorine or bromine.

Specific examples of organometallic compounds which can be used for the preparation of the copolymers of the present invention are: aluminium triethyl, aluminium triisobutyl, aluminium diethylmonochloride, aluminium sesquichloride, aluminium monoethyldichloride, aluminium trihexyl, aluminium trioctyl.

Component (ii) is preferably an aluminium dialkylhalide, in particular aluminium diethylmonochloride.

During the polymerization, the vanadium is gradually made inactive because of the interaction with the organometallic compound, with a consequent lowering of its performance. To avoid this drawback, a further component (component (iii)), which is capable of reactivating the transition metal by oxidation, is usually added to the catalytic system (see "Encyclopedia of polymer science and engineering" Vol 6, page 548).

For this purpose various types of activators are known in the art, among which halogenated esters, such as ethyltrichloroacetate, n-butylperchlorocrotonate, diethyl-dichloromalonate, propyltrichloroacetate, n-butyltrichloroacetate, ethyldichlorophenylacetate are particularly preferred.

Component (iii) is preferably n-butylperchlorocrotonate.

The molar ratio between aluminium and vanadium is generally between 3 and 200, preferably between 30 and 60, whereas the molar ratio between component (iii) and vanadium is generally between 0 and 30, preferably between 3 and 6.

Each of the components of the catalytic system may be formed by one single product or by a mixture of several substances, each fed individually into the reactor or previously mixed aside.

The components of the catalytic system may be fed separately or premixed in different combinations. For example, component (i) may be fed first and then a mixture composed of components (ii) and (iii). One of the preferred methods is to introduce first the mixture composed of components (i) and (iii) into the reactor and then component (ii).

The polymerization is carried out in liquid phase, in suspension.

The polymerization in suspension uses a liquid in which the polymer is basically insoluble or tends to swell, as a reaction medium and with the function of suspending agent.
The suspending agent is composed of one or more substances which are liquid under the conditions of temperature and pressure selected for the polymerization. For this purpose it is possible to use propylene, liquid under the reaction conditions, in which the other olefinic monomers are dissolved. Other agents are, for example, propane, butane, pentane and their isomers.

The polymerization temperature may vary depending on the particular combination of catalytic components and generally ranges from 0 to 60°C, preferably from 20 to 40°C. The contact times vary from 15 minutes to 4 hours, preferably from 25 minutes to 1 hour. The total pressure obviously depends on the temperature and composition of the liquid phase and generally ranges from 5 to 50 bar, preferably from 5 to 30 bar.

The following examples and figures provide a better illustration of the present invention but do not limit it in any way.

### Polymerization.

The preparation of the copolymers was carried out in a 1.7 l autoclave with the following procedure.

The autoclave is first flashed with propylene containing 5% aluminium triisobutyl in hexane, and then with fresh propylene. The liquid monomer (propylene and/or 1-butene) is fed at room temperature, the autoclave is then brought to the polymerization temperature, and hydrogen and ethylene are introduced, through an inlet pipe, in the pre-established ratio, the hydrogen acting as a regulator of the molecular weight of the polymer. To keep the reaction under control, the catalytic system is fed during the test in small quantities, using two separate distributors containing:
(1) vanadium triacetylacetonate with n-butylperchlorocrotonate (activator) in toluene;
(2) aluminium diethylmonochloride (DEAC) in a hexane solution.

The pressure of the autoclave is kept constant during the reaction by feeding ethylene from a cylinder with controlled weight. At the end of the reaction the residual monomers are degassed and the autoclave is emptied. The copolymer thus obtained is finally homogenized in a calender.

### Characterization of the copolymers.

The following measurements are carried out on the crude copolymers, obtained directly from the polymerization described above:
- PROPYLENE CONTENT VIA IR. This analysis is carried out on copolymers in the form of 0.2 mm thick film with an FTIR spectrophotometer. The propylene content is determined by measuring the ratio between the absorbance of the bands at 4390 and 4255 cm⁻¹ and using a calibration curve with standard copolymers.
- 1-BUTENE CONTENT VIA IR. Using the same samples as above, the 1-butene content is obtained by measuring the area of the band between 788 and 754 cm⁻¹ and the absorbance of the band at 4320 cm⁻¹, using the extinction co-efficients indicated in the relative literature.
- INTRINSIC VISCOSITY. These measurements are carried out in orthodichlorobenzene at 135°C. The fall times of the solvent and solutions are measured using a Ubbelhode viscometer at increasing concentrations of the copolymer being tested. The extrapolation of the reduced and inherent viscosities at zero concentration provides the value of the intrinsic viscosity.
- COMPOSITION DISTRIBUTION. 6 g. of copolymer are fractionated by 6 subsequent extractions with liquids having an increasing solvent capacity and for different durations, according to the following table:

**TABLE I**

| Phase | Solvent | Duration (hrs) |
|---|---|---|
| 1 | Ethyl ether 50%vol./ Acetone 50% vol. | 5 |
| 2 | Ethyl ether 90%vol./ Acetone 10% vol. | 5 |
| 3 | Ethyl ether | 5 |
| 4 | Ethyl ether 80%vol./ Hexane 20% vol. | 3 |
| 5 | Hexane | 3 |
| 6 | Heptane | 3 |

In each phase the copolymer is treated with the solvent at boiling point and is then left to settle at room temperature for 8 hours. The floating residue is separated by filtration and the fraction of copolymer contained therein is separated by evaporation of the solvent (phases 1 and 3) or by coagulation with an excess of methanol (phases 4 to 6), then dried and analysed. The residue of the extraction is then treated with the next solvent following the same scheme.
- MOONEY VISCOSITY 1+4. This is determined at 121°C according to the method ASTM D1646-68.
- MOLECULAR WEIGHT DISTRIBUTION. This analysis is carried out by chromatography with gel permeation in orthodichlorobenzene at 135°C. The calibration curve used for calculating the molecular weight is obtained, with standard monodispersed samples of polystyrene, by applying the Mark-Houwink equation valid for linear polyethylene and polypropylene. The molecular weights are adjusted in relation to the composition by means of the Sholte equation (see Th.G.Sholte, N.L.J. Meijerink et al, J. Appl.Polym.Sci., 1984, 29, pages 3763-3782).
- TENSILE TESTS. The stress-strain curves for the crude copolymers are obtained with an Amsler dynamometer at 23°C, with a stress rate of 50 cm/min, on ring test samples (external diameter: 52.6 mm, internal diameter: 44.6 mm), obtained from a plate of copolymer having a thickness of 4 mm, obtained by compression moulding at 150°C and 180 atm.

The same copolymers thus characterized were vulcanized in a plate press at a temperature of 170°C for 0.5 hours. The vulcanized mixtures, prepared in a roll mixer, have the following composition:
- Copolymer :: 100 parts by weight
- FEF carbon black :: 55 parts by weight
- ZnO :: 5 parts by weight
- Paraffin oil :: 3.0 parts by weight
- Sulphur :: 0.37 parts by weight
- Peroximon^{(R)} F40 :: 5 parts by weight

Peroximon ^{(R)} F40 is composed of bis(ter-butyl-peroxyisopropyl-benzene) mixed at 40% by weight with the ethylene/propylene copolymer as a vehicle.

Mooney viscosity measurements are carried out on the mixtures at 121°C according to the method ASTM D1646-68. The vulcanization kinetics is carried out using a Monsanto vulcanometer at 180°C.

The vulcanized copolymers are characterized with the following physical-mechanical measurements:
- TENSILE TESTS. The stress-strain curves are obtained according to the method ASTM D412-87.
- TENSION SET. This is determined according to the method ASTM D412-68.
- SHORE HARDNESS. This is measured according to the method ASTM D2240-68.

### EXAMPLES 1-9 (COMPARATIVE).

Ethylene/propylene-copolymers are prepared following the method described above. The synthesis conditions are shown in Table II. The analytical data and physical-mechanical characteristics are shown in Table III.

### EXAMPLES 10-20 (EX. 12 AND 17 COMPARATIVE)

Ethylene/1-butene copolymers are prepared following the method described above. The synthesis conditions are shown in Table IV. The analytical data and physicomechanical characteristics are shown in Table V.

For the copolymers of Examples 13 and 15, the composition distribution was determined by fractionation with solvents according to the method described above. The results are shown in Table VI. Two copolymers with similar Mw but with a different 1-butene content and consequently also with differing mechanical properties, were selected. On comparing the data, it was observed that on passing from 31 to 41% by weight of 1-butene, the composition distribution becomes much narrower.

### EXAMPLES 21-29

Ethylene/propylene/1-butene terpolymers are prepared using the method described above. The synthesis conditions are shown in Table VII. The analytical data and physical-mechanical characteristics are shown in Table VIII.

### Comparison between the mechanical characteristics of the non-vulcanized copolymers.

Fig. 1 shows the ultimate tensile stress values of the crude product (expressed in Kg/cm²) in relation to the ethylene content (expressed as a molar fraction x 100) for both the ethylene/propylene copolymers (symbol □, Examples 1-9) and for the ethylene/1-butene copolymers (symbol +, Examples 10-20).

Fig. 2 shows a comparison between the stress-strain curves of the crude products relating to the ethylene/propylene copolymers (dashed line, Example 7) and the ethylene/1-butene copolymers (continuous line, Example 17).

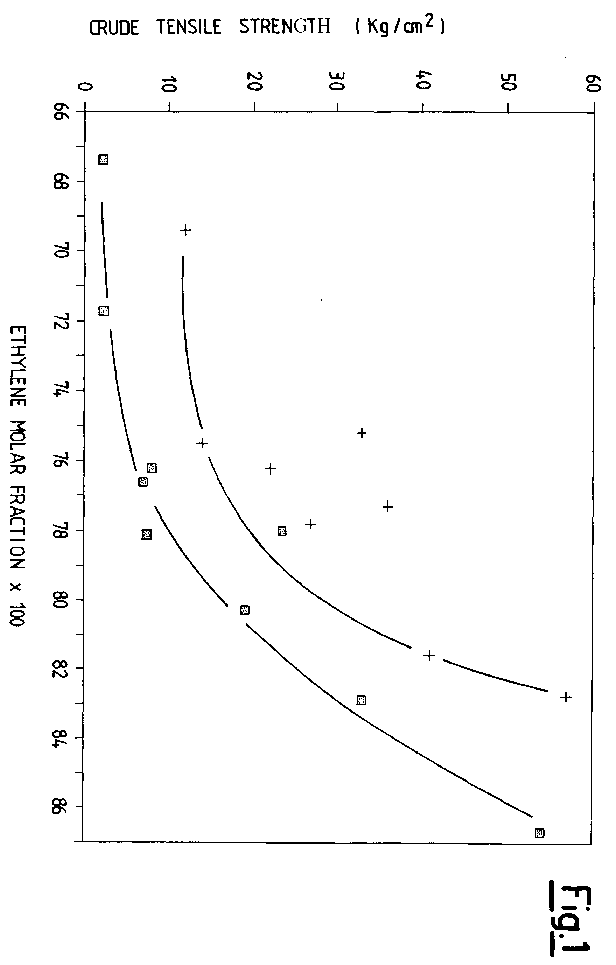

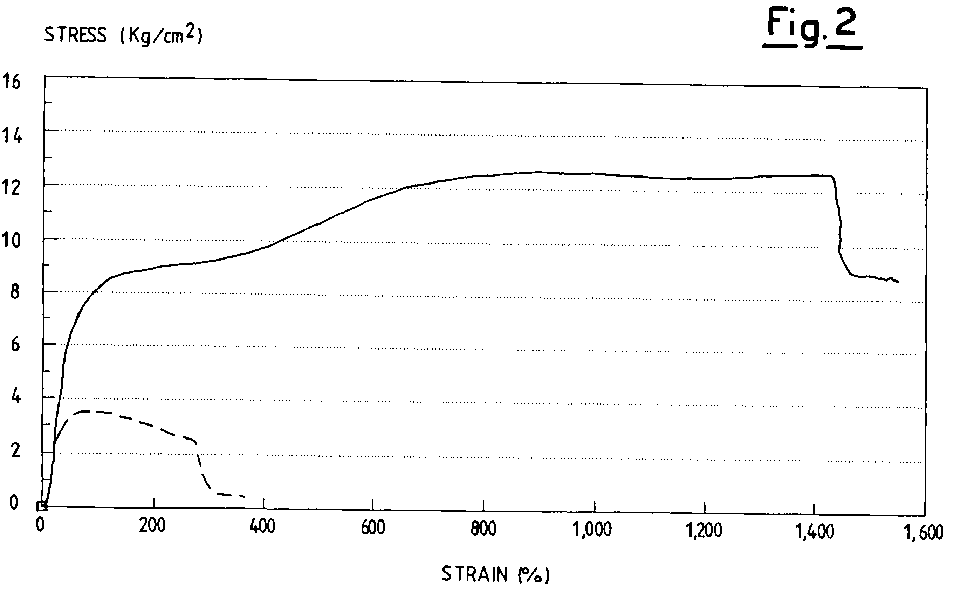

On examining Figures 1-2, it is clear that the copolymers with 1-butene are more resistant than the corresponding ethylene/propylene copolymers. The almost parallel movement of the two graphs in Fig.1 also shows that the 1-butene content influences the mechanical properties of the polymer basically to the same extent as with propylene. It was also observed that the copolymers with 1-butene tend to become resistant to stretching even with low ethylene contents; on the contrary in the ethylene/propylene copolymers this phenomenum occurs only with high ethylene contents.

### Comparison of the behaviour of the copolymers during vulcanization.

The vulcanization of the copolymers in standard mixtures as described above was studied on a Monsanto rheometer. From a comparison of the results obtained, it is evident that, with an equal molar composition, the copolymers with 1-butene have a cross-linking rate which is very similar to that of the ethylene/propylene copolymers.

### Comparison of the mechanical properties of the vulcanized products.

From a comparison of the data shown in Tables III, V and VIII, it can be observed that the ultimate tensile stresses given by the copolymers with 1-butene of the present invention are higher than those of the ethylene/propylene copolymers even after vulcanization, whereas the elongations are lower.

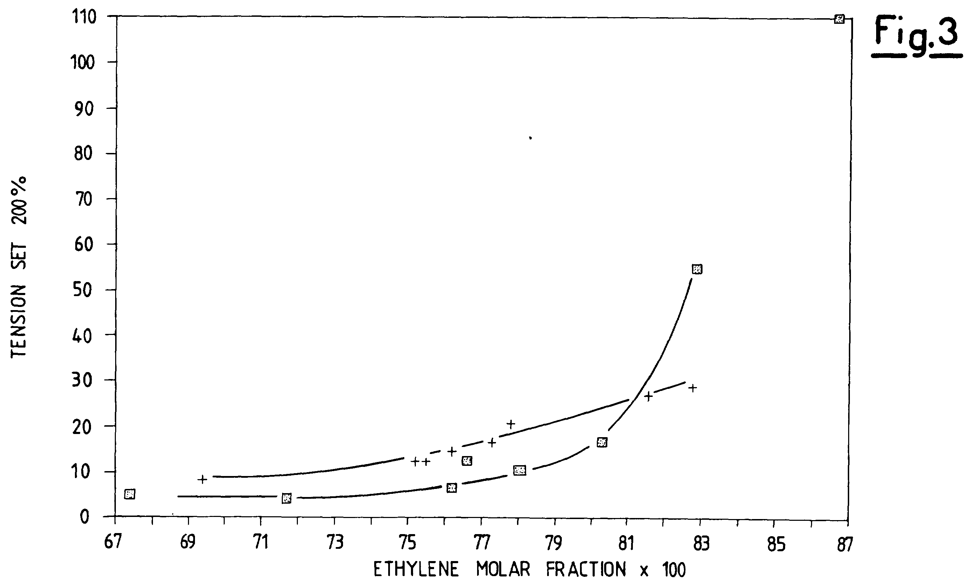

Fig. 3 shows the tension set 200% values in relation to the ethylene content (expressed as a molar fraction x 100) for both the ethylene/propylene copolymers (symbol □, Examples 1-9) and for the ethylene/1-butene copolymers (symbol +, Examples 10-20).

On examining Fig. 3, it can be observed that, although the elastic properties are slightly better for the ethylene/propylene copolymers when the ethylene content is lower than 80% moles, with high ethylene contents, the elastic performance of the ethylene/propylene copolymers rapidly deteriorates, whereas with the ethylene/1-butene copolymers the tension set values remain within acceptable limits.

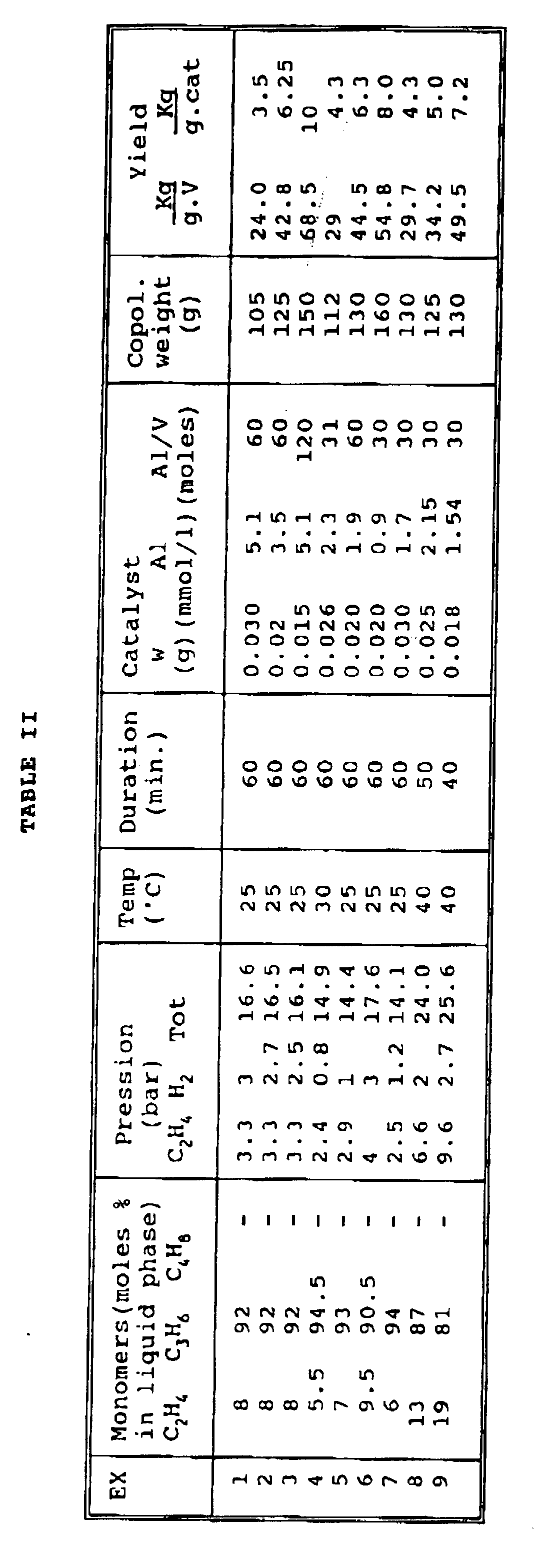

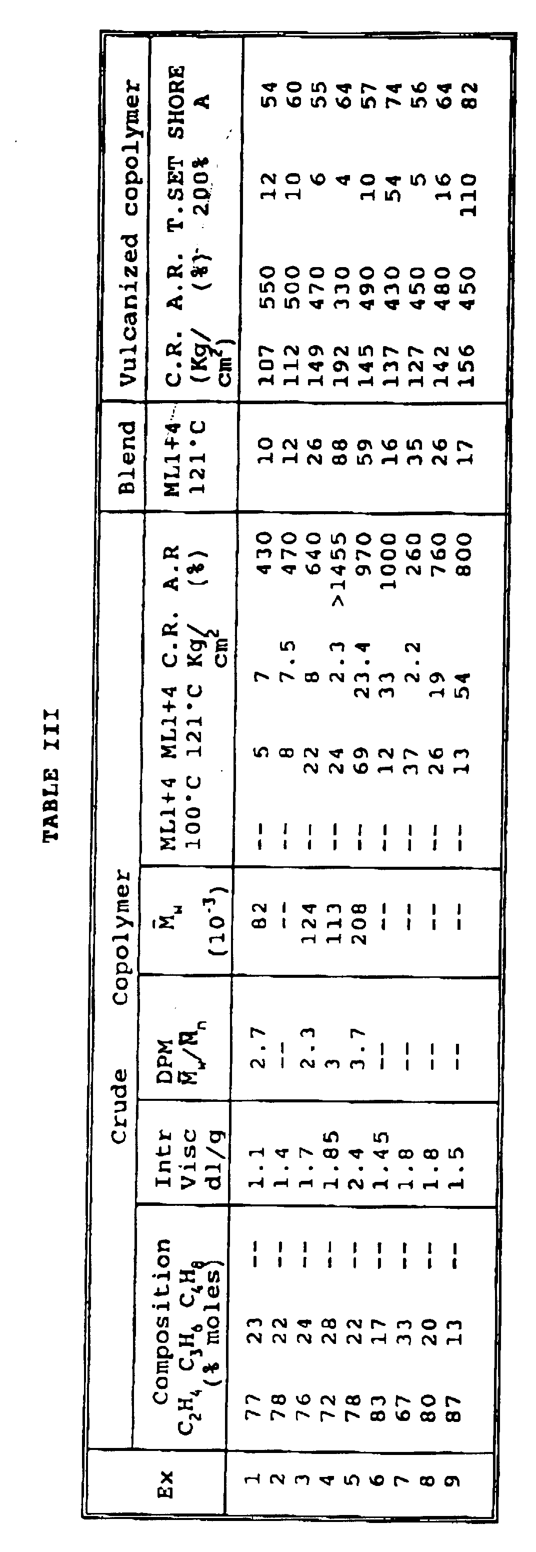

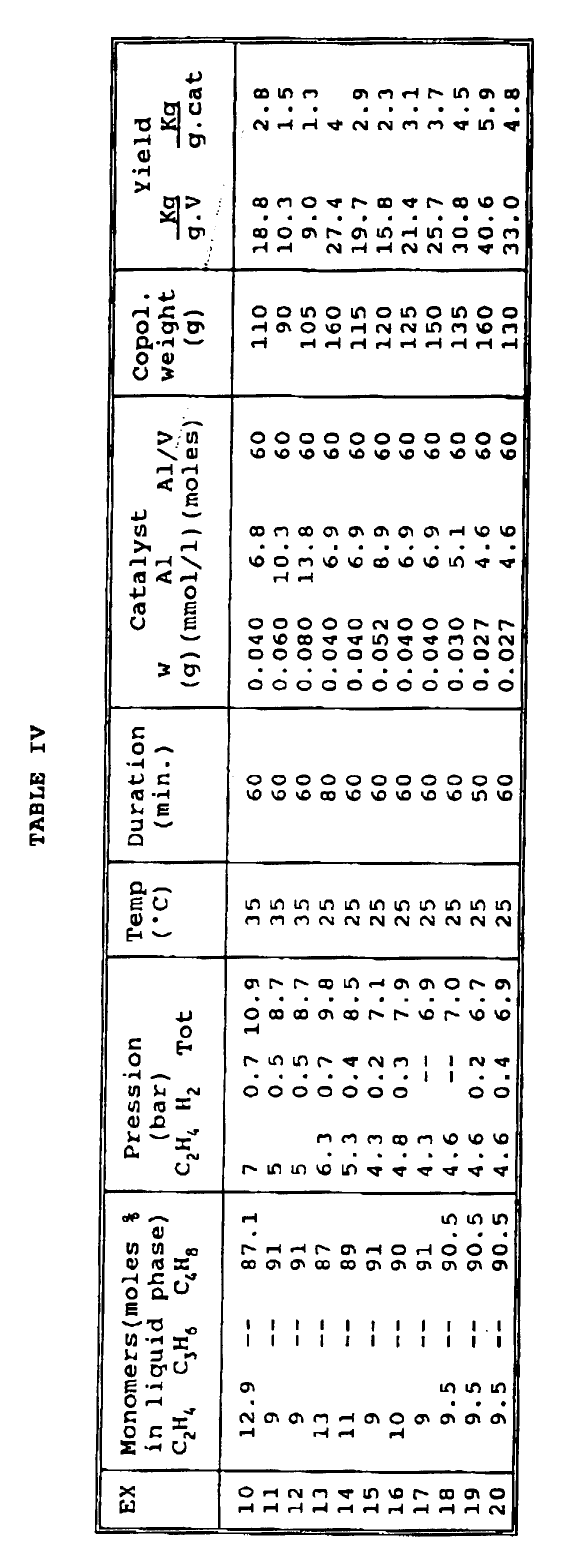

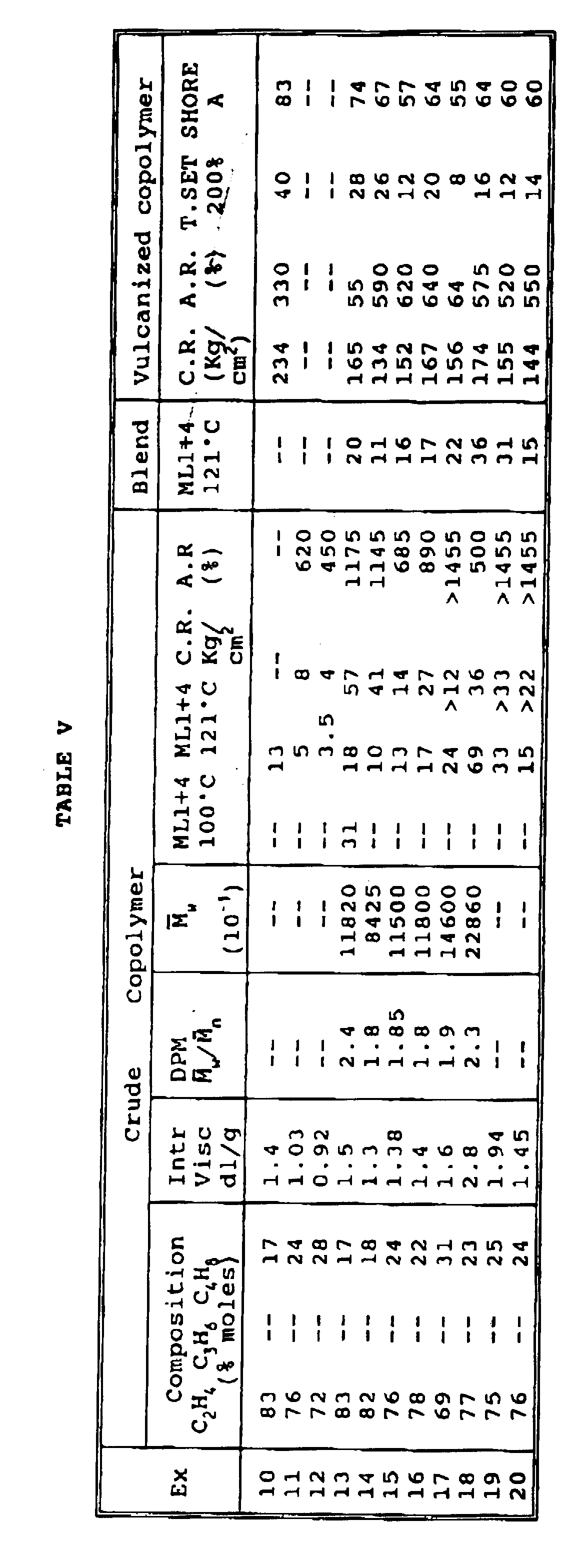

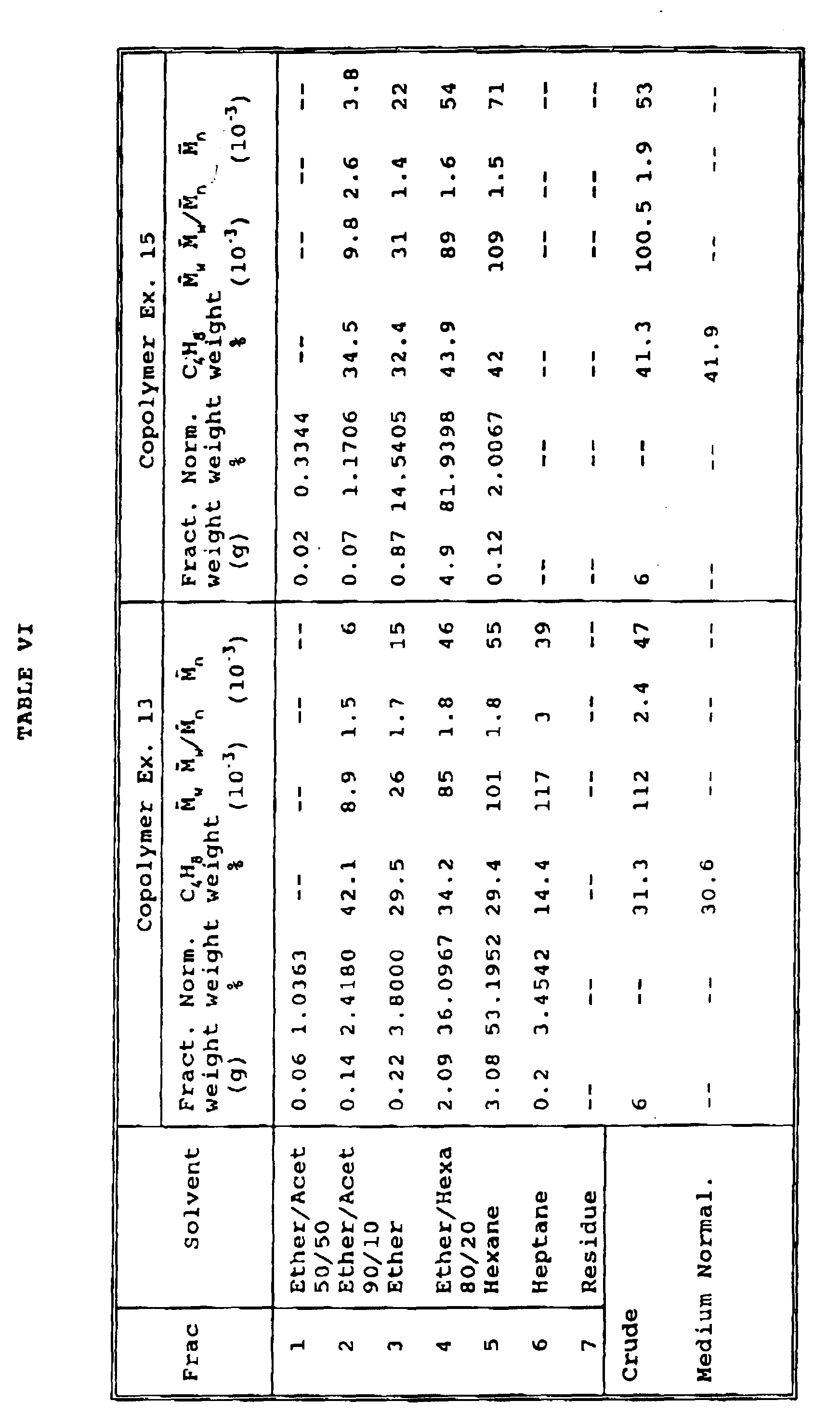

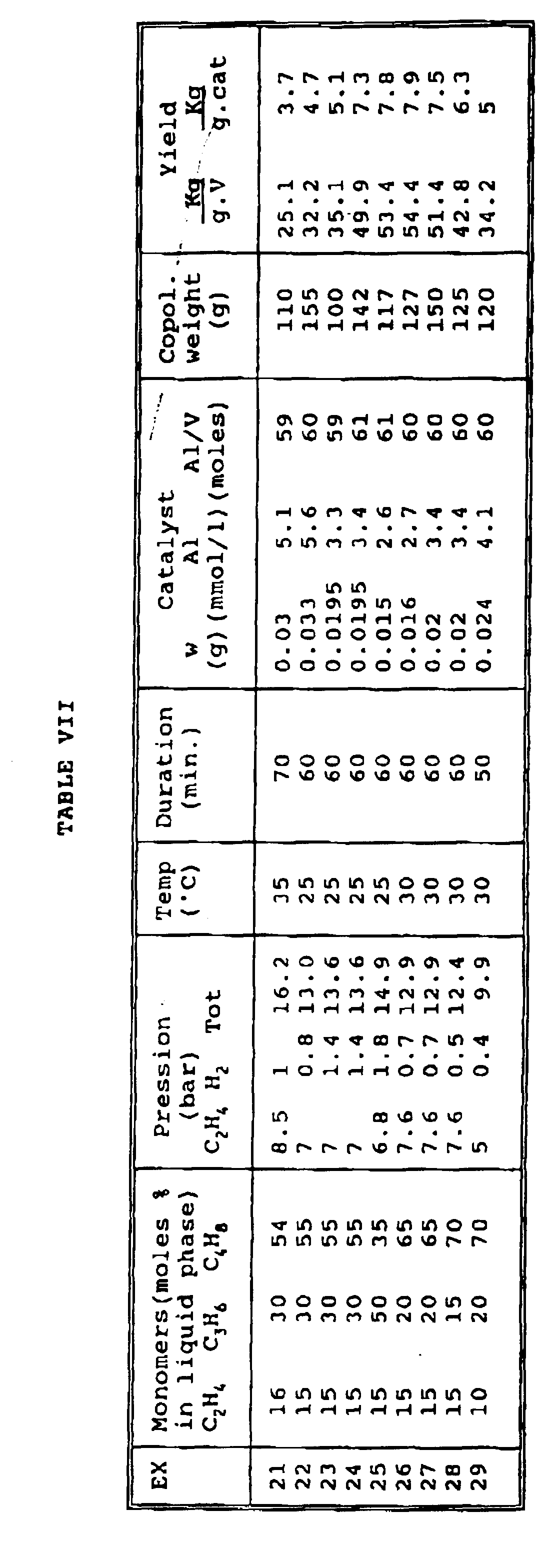

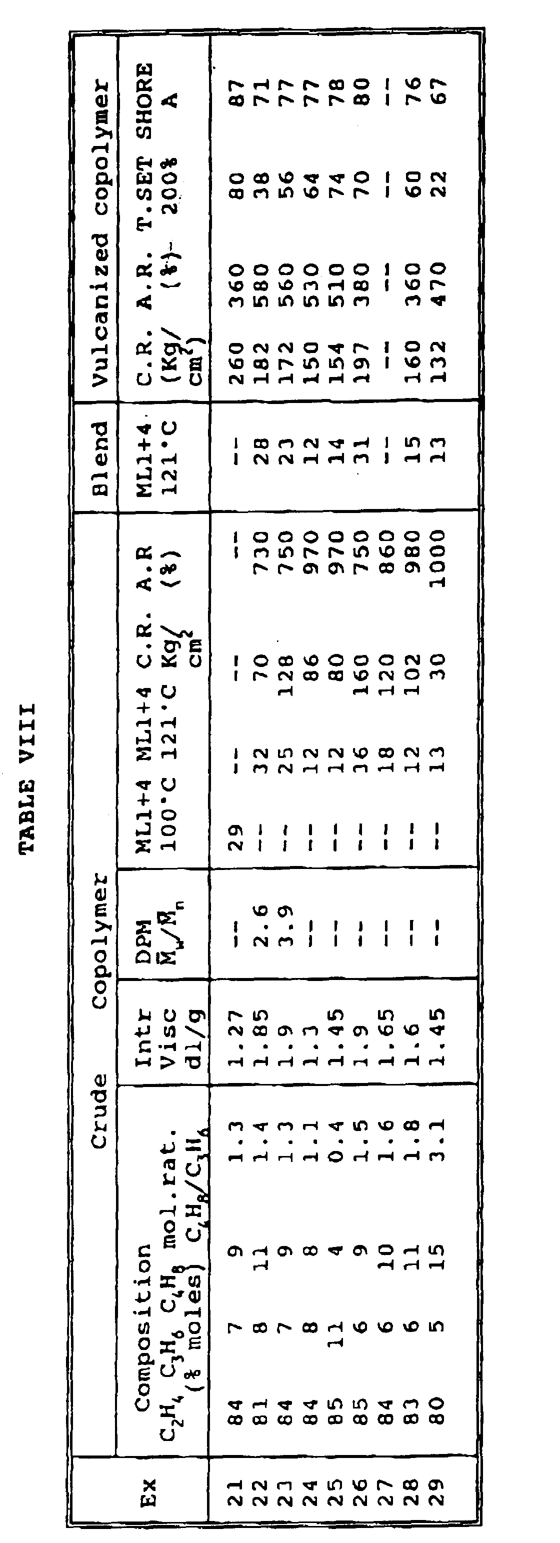

## Claims

1. A process for preparing an elastomeric ethylene copolymer, having a tensile strength of the crude polymer of between 10 and 200 kg/cm² and including
(a) 75-85% mole % of ethylene,
(b) 5-25 mole % of 1-butene and (c) 0-12 mole % of propylene, with the total percent of (a), (b) and (c) being equal to 100,
by polymerising in suspension in a liquid phase and in presence of a catalytic system consisting of
(i) a vanadium compound consisting essentially of vanadium triacetylacetonate and
(ii) one or more organometallic aluminum compounds and possibly
(iii) an activator.

2. A process according to Claim 1 wherein the molar ratio 1-butene/propylene ranges from 0.3 to 3.5.

3. A process according to Claim 2, wherein the molar ratio 1-butene/propylene is between 1 and 2.

4. A process according to Claim 1, wherein component (ii) of the catalytic system is an aluminium trialkyl, an aluminium dialkylhalide or an aluminium alkyldihalide, where the alkyl groups, the same or different, contain from 1 to 18 carbon atoms.

5. A process according to Claim 4, wherein component (ii) of the catalytic system is selected from: aluminium triethyl, aluminium triisobutyl, aluminium diethylmonochloride, aluminium sesquichloride, aluminium monoethyldichloride, aluminium triethyl, aluminium trioctyl.

6. A process according to Claim 5, wherein component (ii) of the catalytic system is aluminium diethylmonochloride.

7. A process according to Claim 1, wherein component (iii) of the catalytic system is a halogenated ester.

8. A process according to Claim 7, wherein component (iii) of the catalytic system is selected from: ethyltrichloroacetate, n-butylperchlorocrotonate, diethyldichloromalonate, propyltrichloroacetate, n-butyltrichloroacetate, ethyldichlorophenylacetate.

9. A process according to Claim 8, wherein component (iii) of the catalytic system is n-butylperchlorocrotonate.

10. A process according to any of the Claims from 1 to 9, wherein the molar ratio between aluminium and vanadium is between 3 and 200.

11. A process according to Claim 10, wherein the molar ratio between aluminium and vanadium is between 30 and 60.

12. A process according to any of the Claims from 1 to 9, wherein the molar ratio between component (iii) and vanadium is between 0 and 30.

13. A process according to Claim 12, wherein the molar ratio between component (iii) and vanadium is between 3 and 6.

14. A process according to any of the Claims between 1 and 13, wherein the polymerization is carried out at temperatures ranging from 0 to 60°C.

15. A process according to Claim 14, wherein the polymerization is carried out at temperatures ranging from 20 to 40°C.

## Patentansprüche

1. Verfahren zur Herstellung eines elastomeren Ethylencopolymeren mit einer Zugfestigkeit des Rohpolymeren zwischen 10 und 200 kg/cm², das (a) 75 - 85 Mol-% Ethylen, (b) 5 - 25 Mol-% 1-Buten und (c) 0 - 12 Mol-% Propylen enthält, wobei sich die prozentualen Gehalte an (a), (b) und (c) auf 100 % addieren,
durch Suspensionspolymerisation in flüssiger Phase und in Anwesenheit eines katalytischen Systems, das aus
(i) einer im wesentlichen aus Vanadiumtriacetylacetonat bestehenden Vanadiumverbindung,
(ii) einer oder mehreren organometallischen Aluminiumverbindung(en) und wahlweise
(iii) einem Aktivator besteht.

2. Verfahren gemäß Anspruch 1, bei dem das Molverhältnis von 1-Buten zu Propylen zwischen 0,3 und 3,5 liegt.

3. Verfahren gemäß Anspruch 2, bei dem das Molverhältnis von 1-Buten zu Propylen zwischen 1 und 2 liegt.

4. Verfahren gemäß Anspruch 1, bei dem die Komponente (ii) des katalytischen Systems ein Aluminiumtrialkyl, ein Aluminiumdialkylhalid oder ein Aluminiumalkyldihalid ist, wobei die Alkylgruppen, die gleich oder verschieden sind, 1 - 18 Kohlenstoffatome enthalten.

5. Verfahren gemäß Anspruch 4, bei dem die Komponente (ii) des katalytischen Systems ausgewählt ist aus: Aluminiumtriethyl, Aluminiumtriisobutyl, Aluminiumdiethylmonochlorid, Aluminiumsesquichlorid, Aluminiummonoethyldichlorid, Aluminiumtriethyl und Aluminiumtrioctyl.

6. Verfahren gemäß Anspruch 5, bei dem die Komponente (ii) des katalytischen Systems Aluminiumdiethylmonochlorid darstellt.

7. Verfahren gemäß Anspruch 1, bei dem die Komponente (iii) des katalytischen Systems ein halogenierter Ester ist.

8. Verfahren gemäß Anspruch 7, bei dem die Komponente (iii) des katalytischen Systems ausgewählt ist aus: Ethyltrichloracetat, n-Butylperchlorcrotonat, Diethyldichlormalonat, Propyltrichloracetat, n-Butyltrichloracetat und Ethyldichlorphenylacetat.

9. Verfahren gemäß Anspruch 8, bei dem die Komponente (iii) des katalytischen Systems n-Butylperchlorcrotonat ist.

10. Verfahren gemäß einem der Ansprüche 1 bis 9, bei dem das Molverhältnis von Aluminium zu Vanadium zwischen 3 und 200 liegt.

11. Verfahren gemäß Anspruch 10, bei dem das Molverhältnis von Aluminium zu Vanadium zwischen 30 und 60 liegt.

12. Verfahren gemäß einem der Ansprüche 1 bis 9, bei dem das Molverhältnis der Komponente (iii) zu Vanadium zwischen 0 und 30 liegt.

13. Verfahren gemäß Anspruch 12, bei dem das Molverhältnis der Komponente (iii) zu Vanadium zwischen 3 und 6 liegt.

14. Verfahren gemäß einem der Ansprüche 1 bis 13, bei dem die Polymerisation bei Temperaturen im Bereich von 0 bis 60 °C durchgeführt wird.

15. Verfahren gemäß Anspruch 14, bei dem die Polymerisation bei Temperaturen im Bereich von 20 bis 40 °C erfolgt.

## Revendications

1. Procédé de préparation d'un copolymère élastomère d'éthylène, ayant une résistance à la traction du polymère brut comprise entre 10 et 200 kg/cm² et comportant (a) 75 à 85 % en moles d'éthylène, (b) 5 à 25 % en mole de 1-butène et (c) 0 à 12 % en moles de propylène, le pourcentage total de (a), (b) et (c) étant égal à 100,
par polymérisation en suspension dans une phase liquide et en présence d'un système catalytique consistant en
(i) un composé vanadium consistant essentiellement en triacétylacétonate de vanadium et
(ii) un ou plusieurs composés organométalliques d'aluminium et, éventuellement,
(iii) un activateur.

2. Procédé selon la revendication 1 dans lequel le rapport molaire du 1-butène/propylène est compris entre 0,3 et 3,5.

3. Procédé selon la revendication 2, dans lequel le rapport molaire de 1-butène/propylène est compris entre 1 et 2.

4. Procédé selon la revendication 1, dans lequel le composant (ii) du système catalytique est un trialkyle d'aluminium, un dialkylhalide d'aluminium ou un alkyldihalide d'aluminium, dont les groupes alkyles, qu'ils soient les mêmes ou qu'ils soient différents, contiennent de 1 à 18 atomes de carbone.

5. Procédé selon la revendication 4, dans lequel le composant (ii) du système catalytique est choisi parmi : le triéthyle d'aluminium, le triisobutyle d'aluminium, le diéthylmonochlorure d'aluminium, le sesquichlorure d'aluminium, le monoéthyldichlorure d'aluminium, le triéthyle d'aluminium ou le trioctyle d'aluminium.

6. Procédé selon la revendication 5, dans lequel le composant (ii) du système catalytique est un diéthylmonochlorure d'aluminium.

7. Procédé selon la revendication 1, dans lequel le composant (iii) du système catalytique est un ester halogéné.

8. Procédé selon la revendication 7, dans lequel le composant (iii) du système catalytique est choisi parmi : l'éthyltrichloroacétate, le propyltrichloroacétate, le n-butyl-thrichloroacétate, le n-butylperchlorocrotonate, le diéthyldichloromalonate, l'éthyldichlorophénylacétate.

9. Procédé selon la revendication 8, dans lequel le composant (iii) du système est du n-butylperchlorocrotonate.

10. Procédé selon l'une quelconque des revendications 1 à 9, dans lequel le rapport molaire entre l'aluminium et le vanadium est compris entre 3 et 200.

11. Procédé selon la revendication 10, dans lequel le rapport molaire entre l'aluminium et le vanadium est compris entre 30 et 60.

12. Procédé selon l'une quelconque des revendications 1 à 9, dans lequel le rapport molaire entre le composant (iii) et le vanadium est compris entre 0 et 30.

13. Procédé selon la revendication 12, dans lequel le rapport molaire entre le composant (iii) et le vanadium est compris entre 3 et 6.

14. Procédé selon l'une quelconque des revendications 1 à 13, dans lequel la polymérisation est effectuée à des températures comprises entre 0 et 60°C.

15. Procédé selon la revendication 14, dans lequel la polymérisation est effectuée à des températures comprises entre 20 et 40°C.
